Europäisches Patentamt

European Patent Office

Office européen des brevets

(11) Publication number: **0 196 476 B1**

## EUROPEAN PATENT SPECIFICATION

(45) Date of publication of patent specification: **29.04.92**  (51) Int. Cl.5: **C08J 5/24**, B29B 11/16

(21) Application number: **86102810.8**

(22) Date of filing: **04.03.86**

(54) Method for preparing a random-fiber reinforced thermoset polymer composite.

(30) Priority: **04.03.85 US 708199**

(43) Date of publication of application:
**08.10.86 Bulletin 86/41**

(45) Publication of the grant of the patent:
**29.04.92 Bulletin 92/18**

(84) Designated Contracting States:
**AT BE CH DE FR GB IT LI NL SE**

(56) References cited:
**FR-A- 1 297 558**
**GB-A- 1 263 812**
**US-A- 3 305 417**
**US-A- 4 178 411**
**US-A- 4 426 470**

(73) Proprietor: **THE DOW CHEMICAL COMPANY**
**2030 Dow Center Abbott Road P.O. Box 1967**
**Midland Michigan 48640-1967(US)**

(72) Inventor: **Yats, Larry D.**
**2840 Franklin**
**Clare, MI 48617(US)**
Inventor: **Wessling, Ritchie A.**
**5007 Nurmi Drive**
**Midland, MI 48640(US)**

(74) Representative: **Weickmann, Heinrich,**
**Dipl.-Ing. et al**
**Patentanwälte H.Weickmann, Dr. K.Fincke**
**F.A. Weickmann, B. Huber Dr. H. Liska, Dr. J.**
**Prechtel Kopernikusstrasse 9 Postfach 86 08**
**20**
**W-8000 München 86(DE)**

## EP 0 196 476 B1

**Description**

This invention is directed toward the preparation of random-fiber reinforced thermoset polymer composites by a wet-laid aqueous technique.

Typically, such fiber reinforced thermoset polymer composites have been made by a hand lay-up method where the reinforcing fibers are saturated with a resin and formed into a pre-impregnated mat. The mat is then formed into a desired shape and treated at an elevated temperature and pressure to cure the thermoset polymer to form a densified fiber reinforced composite article.

It is desirable, however, to form such fiber reinforced composites in a more efficient manner. A solution is to employ wet-laid aqueous techniques such as are generally disclosed in U. S. Patents 4,426,470 and 4,431,696; U. K. Patent 1,263,812; French Patent Publication 2,507,123 and European Patent Publication 0,039,292-A1.

US-PS 4,426,470 discloses a process for making reinforced polymer composites wherein a dilute aqueous slurry of a solid water-insoluble, heat-fusible organic polymer, a reinforcing material and a latex binder is formed, the slurry is flocculated, wet-laid, dewatered and dried. The heat-fusible organic polymer is a polymer that is capable to join into a unitary structure when applying heat. According to the description of US-PS 4,426,470 the heat-fusible polymer may be a thermoplastic or thermosetting resin. However, the preferred embodiments and all of the examples in US-PS 4,426,470 are concerned with the use of thermoplastic resin, whereby the use of thermoset resins is contemplated only to the extent that they behave like thermoplastic resins.

GB-PS 1 263 812 is concerned with a method of forming fibrous sheet material. According to this patent a fiber-containing polymeric sheet material is formed and then thermoformed or cold-pressed to form a smooth surface thereon. The sheet material comprises a particulate solid that may be a thermoplastic or thermosetting resin, and a binder that may be a thermoplastic, thermosetting or natural polymer or oligomer. A reaction between polymer and binder is neither suggested nor possible because at most one of the two components has functional groups.

In these wet-laid aqueous techniques thermoplastic polymers are used to produce fiber reinforced mats which can be subsequently shaped and fabricated into a composite article.

The method of the invention now provides for the preparation of a random-fiber reinforced thermoset polymer composite which can be prepared and fashioned into sheets and other useful articles of manufacture.

More particularly, the present invention provides a process for preparing a random-fiber reinforced thermoset polymer composite comprising the steps of

(a) preparing an aqueous slurry comprising reinforcing fibers, a binder, and a thermoset polymer formulation selected from

(i) a solid thermoset polymer;

(ii) a solid thermoset polymer and a latent curing agent which do not intimately mix until both components are heated and melted; and

(iii) an aqueous dispersion of the solid thermoset polymer;

(b) destabilizing the solids in the slurry with a polymeric flocculant having a charge which is opposite to the charge of said binder, and dewatering the aqueous slurry;

(c) collecting the solids in the form of a mat;

(d) drying the mat under conditions such that said thermoset polymer remains in a heat formable state;

(e) saturating the mat prepared from (a)i and (a)iii with a liquid coreactant; and

(f) subjecting said mat to an elevated temperature sufficient to cure said polymer and to form said mat into said composite.

The present invention accordingly provides that in one aspect the thermoset polymer remains heat formable prior to formation into a predetermined shape, step (f), by employing a latent curing agent in the thermoset polymer formulation.

In an alternative procedure, the thermoset polymer mat remains heat formable prior to formation into a predetermined shape, step (f), and is subsequently saturated with the liquid coreactant, step (e), to cure the thermoset polymer.

The present invention also provides for a process by which the mat can be prepared by partial curing of the thermoset polymer such that the mat can be subsequently formed and fully cured into a useful article of manufacture.

In another procedure of the invention, a mat containing reinforcing fibers and an uncured thermoset polymer is compressed into a densified composite thereby placing the reinforcement fibers under strain. The composite is then gradually heated to cause a partial curing of the polymer and a "lofting" effect in the

2

composite prior to cross-linking of the thermoset polymer. That is, as the polymer begins to soften the reinforcement fibers (which are under flexural strain) are allowed to relax and straighten to thereby expand the uncured polymer such that, in effect, the composite will become less dense and increase in volume. The partially cured lofted composite can then be fully cured by continued heating.

In one aspect, the method is characterized by employing a thermoset polymer with a latent curing agent, step (a)ii, i.e., one which does not cure the polymer until the mat is dried and thermoformed. In another aspect, the method is characterized by curing the thermoset polymer after saturating the dried mat with a liquid or gaseous catalyst or coreactant, step (e). For example, a liquid coreactant can be a vinyl polymerizable monomer such as styrene containing a catalyst. A gaseous catalyst can be, for example, ammonia which cures the polymeric portion of the mat.

More specifically, in the method of the invention, a dilute aqueous slurry is prepared comprising an aqueous medium, thermoset polymer, reinforcing fibers, a binder, a flocculant, and other optional ingredients such as polymeric paste or fibers, colorants, anti-oxidants, fillers, and the like. Typically, the reinforcing fibers are dispersed in the aqueous medium and the binder is then added. To this slurry is added and uniformily dispersed a solid thermoset polymer usually in the form of a powder, or as an aqueous dispersion. The resulting mixture is then flocculated and destabilized by using a polymeric flocculant. The flocculated slurry is then dewatered and the solids collected on the screen of a wet-laid apparatus such as a sheet mold or other continuous wet-laid equipment. The wet mat is then dried under conditions such that the thermoset polymer remains heat formable and, accordingly, is not totally cured. Drying of the mat may be conducted at ambient temperature, in an oven at an elevated temperature, in a vacuum chamber, or a combination thereof. Suitable methods are disclosed in U. S. Patent 4,426,470. The dried mat can be partially densified by passing the mat from the drier directly through nip rolls. Alternatively, the dried mat can be formed into an article of manufacture having the desired shape and cured. Curing of the thermoset polymer can be accelerated by the application of thermal energy, radiation, or chemical accelerators.

In the method of step (a)ii, the polymer portion of the mat consists of a thermoset polymer and a curing agent which do not intimately mix until both components are heated and melted during the fabrication process.

In the aforementioned saturation method of step (e) the mat can be formed into a desired shape prior to or after saturation with the coreactant and then cured. Alternatively, the mat can be saturated with the coreactant, molded and cured simultaneously. Optionally, the mat can be compressed and densified before saturation with the coreactant provided the densified mat remains porous enough to absorb or imbibe the coreactant.

The wet-laid process of the invention requires a thermoset polymer which is defined, for purposes of this invention, as a solid polymer at ambient temperatures which, upon the addition of a curing agent, accelerator or coreactant, and the application of heat, accelerates curing of the polymer to a thermoset solid.

The saturation method of step (e) can employ condensation reactions such as between epoxy polymers and liquid curing agents.

Typical thermoset polymers which can be employed are the epoxides, vinylized epoxides, vinyl esters, phenolics, polyesters, and phenol formaldehydes. Preferred thermoset polymers are epoxy, vinyl ester, or phenolic resins. More preferred are diglycidylether of bisphenol-A type epoxy resins, epoxy novolac resins, and phenol formaldehyde type resins. Other suitable epoxy resins, are disclosed in Lee and Neville, Handbook of Epoxy Resins, Chapter 2, McGraw Hill, New York (1967).

A one-stage or self-curing thermoset polymer is produced by condensing a phenolic resin and an excess (more than 110 percent) of formaldehyde in the presence of a basic catalyst, e.g., ammonium or sodium hydroxide. This produces a thermosetting polymer when subjected to heat.

A two-stage thermoset polymer is produced by condensing a phenolic resin and an insufficient amount (not more than 84 percent) of formaldehyde in the presence of an acid catalyst. To cure this phenolic resin to a cross-linked thermoset, a hardening agent, such as, hexamethylenetetramine, is used.

Curing agents which can be employed with the thermoset polymers of the invention are selected from those which may produce a partial curing of the thermoset polymer during the initial preparation, dewatering and drying of a wet-laid composite mat. Such curing agents are referred to as latent curing agents which become further activated during the final molding of the composite mat into a desired article.

Generally, the latent curing agent will be activated at a temperature above ambient. Where the composite mat is dried at ambient temperature the latent curing agent can be chosen such that it is activated at a temperature of less than 100°C, but greater than ambient temperature. Preferably, the latent curing agent is activated at a temperature of greater than 100°C. Examples of curing agents which are suitable for preparing thermoset composites of the invention are, for example, benzoyl peroxide (free radical initiator), aliphatic and aromatic amines or polyamines, polythiols, phenolics, anhydrides, diaminodiphenyl sulfone (DADS), methylenedianiline, and Versamide®, (a trademark of General Mills Chemical, Inc.) In cases where phenol formaldehyde type resins are employed, the preferred curing agents are hexamethylenetetraamine, urea formaldehyde, melamine formaldehyde or polyamines.

Curing agents and their effects are more fully disclosed in the literature, for example, the Handbook of Epoxy Resins, (supra) and in Chemical Reactions of Polymers, Interscience Publishers, New York, pages 912--926, (1967).

In addition to the above-mentioned curing agents, accelerators can be employed which are commonly utilized for rapid curing of thermoset polymers. The use of such accelerators in the present invention should not cause the thermoset composites to cure prematurely.

The reinforcing fibers which are employed in the process of the invention include both organic and inorganic fibers such as glass fibers, graphite fibers, metal fibers, metal coated glass or graphite fibers, ceramic fibers, polymeric fibers such as fibers made from, for example, aromatic polyamide, cellulose or polyolefin. Mixtures of any of the aforementioned fibers may also be employed. Preferably glass fibers are employed such as chopped glass having an average length of from 3.2 to 25.4 mm (1/8 to 1 inch) and/or milled glass fibers having an average length of from 0.79 to 3.2 mm (1/32 to 1/18 inch). Preferably, the fibers have an aspect ratio (ratio of length to diameter) of greater than 40. More preferably, the fibers are glass fibers having a length of from 3 to 16 mm and a diameter of from 13 to 25 micrometer. The reinforcing fibers generally comprise from 10 to 80 weight percent of the total weight of solids, on a dry weight basis, of the fiber reinforced composite.

A binder component is added to the aqueous slurry to aid in binding or adhering the components to each other while they are suspended in the slurry such that they can be destabilized and collected. Typical binders in wet-laid systems include starches, synthetic polymers and natural polymers. Generally, the polymeric binders are ionically charged to aid in the destabilization of the solids in the slurry. In some cases the binder can co-react with the thermoset polymer. Suitable polymeric binders having ionic charges are latex binders which are aqueous colloidal dispersions of substantially water-insoluble organic polymers having anionic or cationic bound charges in an amount sufficient to provide stabilization of the colloid, but insufficient to cause the polymer to be water-soluble. Such an amount of bound charge will usually be from 0.04 to 0.60 milliequivalent per gram (meq/g) of polymer solids. The term "bound to the polymer" with respect to ionic groups or charges, refers to ionic groups or charges which are not desorbed from the polymer by dialysis of the latex against deionized water.

By "available" charge is meant the amount of charge an ionizable group would provide to a polymer when fully ionized.

In another embodiment the binder may contain pH independent groups. By the term "pH independent groups" as applied to ionic groups is meant that the groups are predominantly in an ionized form over a wide range of pH, i.e. a pH of from 2 to 12. Representative of such groups are sulfonium, sulfoxonium, isothiouronium, pyridinium, quaternary ammonium groups, sulfate and sulfonate groups.

The essentially water-insoluble organic polymers of the binder have a backbone which may be natural or synthetic and may be a homopolymer or a copolymer of two or more ethylenically unsaturated monomers or be derived from such homopolymers or copolymers. Representative organic polymer binders are natural or synthetic rubbers such as styrene/butadiene, isoprene, butyl and other rubber-like polymers of unsaturated monomers. Preferably such polymeric binders are film-forming polymers at room temperature or below, although in a particular instance, a polymer may be used which is film-forming at the temperature of the wet-laid mat formation process. Polymeric binders which are made film-forming by the use of plasticizers may also be used. Polymeric binders which are readily available in latex form are preferred, especially hydrophobic polymers which are prepared by emulsion polymerization of one or more ethylenically unsaturated monomers. When in latex form, such polymeric binders advantageously have a particle size of from 500 to $5000 \cdot 10^{-10}$ m (500 Å to 5000 Å) and preferably have a particle size of from 800 to $3000 \cdot 10^{-10}$ m (800 to 3000 Å) as measured by electron microscopy.

Among latexes which can be used in the present invention are those described in U. S. Patent 4,056,501, issued November 1, 1977, to Gibbs et al. These latex binders are cationic structured particle latexes consisting of a water-insoluble, nonionic, organic polymer core encapsulated with a thin layer of a copolymer having chemically-bound pH independent cationic groups wherein the bound cationic charges are at or near the outer surface of the particles. Anionic latexes which may be employed are well known in the art and include such products as carboxylated styrene-butadiene latexes and acrylic latexes which are prepared by emulsion polymerization. The binder is generally employed in an amount of from 1 to 10 weight percent of the total weight, on a dry solids basis, of the composite.

Preferred latexes are those which when cast into films and dried have a relatively low water adsorption, and a relatively high wet tensile strength. These preferred latexes have a 24 hour water adsorption value of desirably less than about 20, preferably less than about 16, and most preferably less than about 14 percent as measured by ASTM D-570-63.

The aqueous slurry is flocculated in order that the thermoset polymer, reinforcing fibers, binder and other dispersed ingredients can be collected from the aqueous dispersion or slurry. Typically, a polymeric flocculant opposite in charge to the binder, is employed. However, other means of destabilizing the aqueous phase can be employed. Examples of suitable flocculants include partially hydrolyzed polyacrylamide for cationic systems, and modified cationic polyacrylamide and diallyldiethylammonium chloride for anionic systems.

Additionally, the slurry of the subject invention can include fillers in an amount of up to 33 percent by weight, based on the total dry weight of solids in the composite. Examples of such fillers include silica compounds, $CaCO_3$, MgO, $Mg(OH)_2$, $CaSiO_3$ (wollastonite), mica, and mixtures thereof. Optionally, the composite may contain up to 10 weight percent of other additives such as, for example, pigments and dyes, UV stabilizers, antioxidants, foaming agents, antifoaming agents, bacteriocides, electromagnetic radiation absorption agents, depending on the particular use of the article to be produced.

In particular, the optional addition of low levels of synthetic polymeric fibers or polyolefin pastes or pulp have been found to be advantageous in the wet-laid preparation of the thermoset composite. For example, polyaramid pulp additives as disclosed in French Patent 2507123-A contribute to the cohesive properties of the composite mat. Other typical polymeric fibers are fibers made of polyethylene, polypropylene, polyvinylchloride, polyester, polystyrene and ABS (acrylonitrile-butadiene-styrene copolymer). Preferred polymeric fibers are commercially available from Himont Corporation under the trademark Pulpex E® for polyethylene fibers and under the trademark Pulpex P® for polypropylene fibers. Generally, the polymeric fibers are present in an amount of from 1 to 10, preferably from 3 to 5 weight percent, based on the total dry weight of solids in the composite.

Optionally, the aqueous portion of the slurry can be thickened to aid in the dispersion and stabilization of the solid ingredients in the aqueous slurry. Thickeners which can be added to the aqueous portion of the slurry are, for example, methylcellulose, carboxymethylcellulose, polymers of acrylamides, gums, or clays. One such group of thickeners is commercially available from Kelco Company under the trademark Kelzan®, for xanthan gums. Thickened aqueous mediums having a viscosity above $10^{-3}$ Pa•s (1 centipoise) are preferred (as measured by Brookfield LVDT at 12 rpm). More preferable are viscosities from 1.5 to $10.10^{-3}$ Pa•s (1.5 to 10 cp).

In the following examples, all weights are given as a dry weight, based on the total weight of the composite ingredients, unless otherwise specified. All densified sheets had a thickness of 2.54 mm, a width of 8.9 cm, and a length of 15.24 cm.

Example I

(a) A random-fiber/thermoset polymer composite mat was prepared by dispersing 21.4 g of glass fibers, having an average length of 6.3 mm, in 7 liters of water, adding 1.5 g of latex solids comprising 54 styrene/45 butadiene/1 fumaric acid and 50 g of an epoxy resin powder consisting of about 70 parts of the epoxy resin having an epoxy equivalent weight of from 500 to 575, 30 parts of a phenolic resin and 0.2 percent methylimidazole. The slurry was destabilized with a dilute, cationic, aqueous solution containing 0.5 g of a flocculant (Betz® 1260- a trademark of Betz Laboratories for a high molecular weight acrylamide copolymer cationic flocculant). The destabilized slurry was dewatered and the solids collected on an 80-mesh (177 micron) screen in a sheet mold.

The wet mat was dried at a temperature of from 50° to 55°C in a vacuum oven. The dried mat was then molded into a densified sheet by placing the mat in a matched metal die-set and heating the die-set to a temperature of 200°C for 15 minutes at a pressure of 3445 kPa (500 psi). The densified sheet contained 28.6 weight percent glass fibers. The physical properties were measured and are shown in the Table.

(b) A densified sheet was prepared from the above mentioned thermoset resin containing no glass fiber. The sheet was molded as above. This sheet demonstrates the difference between an unreinforced thermoset resin sheet and a random-fiber/thermoset resin composite sheet of the invention. The physical properties for the unreinforced sheet are shown in the Table.

Example II

A random-fiber/thermoset polymer composite sheet was prepared employing a two-step method. The thermoset polymer employed was a Derakane® resin, (a trademark of The Dow Chemical Company for vinyl ester type resins).

In the first step, an aqueous slurry was prepared by dispersing 30 g of milled glass fibers, having an average length of 1.6 mm,in 7 lit. of water with a Derakane® resin in the form of an aqueous dispersion which was cationically stabilized with a thiodiethanol/lactic acid surfactant. 30 g of the Derakane® aqueous dispersion consisting of approximately of 50 percent water and 50 percent Derakane® resin solids was added to the slurry The aqueous slurry was destabilized with 30 g of a 25 percent solid, anionic stabilized, aqueous dispersion of a copolymer of ethylene/acrylic acid (a copolymer containing 25 weight percent acrylic acid). The slurry was dewatered and the solids collected in the form of a mat and dried for 2 hours at 105°C. The dry weight of the mat was 42.6 g with a 65.6 percent glass fiber content based on the dry total weight of the mat.

In the second step, 31.5 g of the above-prepared mat was saturated with 30 g of liquid styrene monomer containing 0.3 g of a benzoyl peroxide catalyst. The saturated mat was then molded into a densified composite sheet in a matched metal die-set at a temperature of 200°C and at a pressue of 3445 kPa (500 psi) for 30 minutes. The physical properties of the densified sheet were measured and recorded in the Table.

Example III

A random-fiber/thermoset polymer composite sheet was prepared as follows. An aqueous slurry was prepared from 28 liters of water thickened with 1 g of Kelzan® XC (a trademark of the Kelco Company for xanthan gum). To the thickened water was added 8.4 g polyethylene fibers and 84 g glass fibers having an average length of 4.76 mm. To this dispersion was added 14 g of a latex binder of the composition described in Example I and 173.6 g of a thermoset polymer comprising equal equivalent portions of an epoxy novolac resin, having an epoxy equivalent weight of 180, and a diaminodiphenyl sulfone curing agent. The slurry was flocculated with a dilute, cationic, aqueous solution containing 0.5 g of a Betz® 1260 flocculant. The slurry was dewatered and the solids collected in the form of a mat. The mat was dried at 110°C for 1.75 hours. The mat was preheated for 15 minutes at a temperature of 110°C. The mat was then molded into a densified sheet at a temperature of 175°C and at a ram pressure of 2 t for 4 minutes, followed by a ram pressure of 7 t for 15 minutes. The sheet was then cooled for 15 minutes while retaining a ram pressure of 7 t . The densified sheet was recovered from the mold and the average physical properties measured and recorded in the Table.

Example IV

A random-fiber/thermoset polymer composite mat was prepared as follows. An aqueous slurry was prepared by dispersing 84 g of glass fibers having an average length of 4.76 mm and 14 g of the latex binder of Example I in 28 liters of water thickened with 1 g of Kelzan® XC. To this dispersion was added 182 g of a 1:1 equivalent weight mixture of an epoxy novolac resin (equivalent weight 180) and diaminodiphenyl sulfone curing agent. The slurry was destabilized with a dilute, cationic, aqueous solution containing 0.5 g of Betz® 1260 flocculant. The solution was dewatered and the solids collected into a mat and dried at a temperature of 110°C for 1.75 hours.

A sample of the mat was molded to form a densified sheet by preheating the mat for 15 minutes at a temperature of 110°C. The mat was then molded in a positive pressure mold at a ram pressure of 2 t for 10 minutes at a temperature of 175°C, followed by a ram pressure of 7 t for 15 minutes at a temperature of 175°C. The sheet was then cooled for 15 minutes while maintaining a ram pressure of 7 t . The densified sheet was removed from the mold and the physical properties measured and recorded in the Table.

Example V

A random-fiber/thermoset polymer composite sheet was prepared as follows. An aqueous slurry was prepared by adding 84 g of glass fibers having an average length of 4.76 mm and 14 g of a latex binder of the same composition as in Example I to 28 liters of water thickened with 1 g Kelzan® XC. To this dispersion was added 182 g of an epoxy novolac resin (equivalent weight 180) and a bis-phenolic hardener.

The slurry was destabilized with a dilute, cationic, aqueous solution containing 0.3 g of Betz® 1260 flocculant. The solution was dewatered and the solids collected into a mat and dried at a temperature of 110°C for 2.25 hours.

A sample of the mat was preheating to a temperature of 110°C for 15 minutes and then molded into a densified sheet in a positive pressure mold at a ram pressure of 1 ton for 4.5 minutes at a temperature of 175°C, followed by a ram pressure of 7 t for 15 minutes at a temperature of 175°C. The sheet was then cooled for 15 minutes while under a ram pressure of 7 t . The physical properties of the densified sheet were measured and recorded in the Table.

Example VI

A random-fiber/thermoset polymer composite sheet was prepared as follows. An aqueous slurry was prepared by adding 84 g of glass fibers having an average length of 4.76 mm and 14 g of a latex binder of the composition of Example I to 28 liters of water thickened with 1 g Kelzan® XC. To this dispersion was added 182 g of a phenolic thermoset resin consisting of Durez® (a trademark of The Occidental Petroleum company for a phenol/formaldehyde resin). The slurry was destabilized with Betz® 1260 flocculant, dewatered, and the solids collected as a mat and dried for 24 hours at room temperature. The mat was partially cured by heating for 10 minutes at a temperature of 110°C. The mat was then compression molded into a densified sheet under the same conditions as in Example V. The physical properties of the densified sheet were measured and recorded in the Table.

TABLE

| Example | Tensile Strength kPa (psi) | Tensile Modulus kPa (psi) x $10^6$ | Elongation (percent) | Notched Izod Joules/met. (ft/lb/in) |
|---|---|---|---|---|
| I(a) | 95,100 (13,800) | 8.27 (1.2) | 1.8 | -- |
| I(b)* | 58,300 (8,450) | 2.76 (0.4) | 6.2 | -- |
| II | 87,500 (12,690) | 13.1 (1.9) | 0.9 | 53.4 (1.23) |
| III | 113,000 (16,400) | 7.58 (1.1) | -- | 166 (3.11) |
| IV | 83,400 (12,100) | 8.27 (1.2) | -- | 283 (5.30) |
| V | 73,100 (10,610) | 9.65 (1.4) | -- | 235 (4.40) |
| VI | 123,600 (17,930) | 8.96 (1.3) | -- | 277 (5.18) |

*Not an example of the subject invention.

**Claims**

1.   A process for preparing a random-fiber reinforced/thermoset polymer composite comprising the steps of:

(a) preparing an aqueous slurry comprising reinforcing fibers, a binder, and a thermoset polymer formulation selected from
(i) a solid thermoset polymer;
(ii) a solid thermoset polymer and a latent curing agent which do not intimately mix until both components are heated and melted; and
(iii) an aqueous dispersion of the solid thermoset polymer;
(b) destabilising the solids in the slurry with a polymeric flocculant having a charge which is opposite to the charge of said binder, and dewatering the aqueous slurry;
(c) collecting the solids in the form of a mat;
(d) drying the mat under conditions such that said thermoset polymer remains in a heat formable state;
(e) saturating the mat prepared from (a)(i) and (a)(iii) with a liquid coreactant; and
(f) subjecting said mat to an elevated temperature sufficient to cure said polymer to form said mat into said composite.

EP 0 196 476 B1

2. The process of Claim 1, wherein said reinforcing fibers are selected from glass fibers, ceramic fibers, polyamide fibers, graphite fibers, metal fibers and metal coated glass or graphite fibers, or mixtures thereof, wherein said fibers have an average length of from 3.2 mm to 25.4 mm and an aspect ratio of greater than 40.

3. The process of Claim 2, wherein said reinforcing fibers are glass fibers having an average length of from 3.2 to 19 mm.

4. The process of Claims 1, 2 or 3, wherein said binder is a water insoluble organic polymer particle having anionic or cationic bound charges and a particle size of from 500 to $5000 \cdot 10^{-10}$ m (500 Å to 5000 A°), and said binder being present in the amount of from 1 to 10 weight percent, based on the total weight, on a dry solids basis, of the composite.

5. The process of any one of the preceding claims, wherein the thermoset resin is a vinyl terminated epoxy resin and the coreactant is a vinyl polymerizable monomer containing a catalyst.

6. The process of Claim 5, wherein said vinyl polymerizable monomer is styrene.

7. The process of any one of Claims 1 to 4, wherein said thermoset resin is a phenol formaldehyde type resin and said latent curing agent is selected from hexamethylenetetraamine, urea formaldehyde, melamine formaldehyde and polyamines.

8. The process of any one of the preceding claims, wherein said curing agent is a free radical initiator.

9. The process of Claim 8, wherein said initiator is selected from peroxides capable of initiating free radical polymerization.

10. The process of any one of the preceding claims, wherein said composite includes from 1 to 10 percent by weight, based on the total dry weight of solids in the composite, of an additive selected from polymeric fibers, polyolefin paste and polyolefin pulp.

11. The process of any one of the preceding claims, wherein said composite includes up to 33 percent by weight, based on the total dry weight of solids in the composite, of a filler selected from silica compounds, $CaCO_3$, $MgO$, $Mg(OH)_2$, $CaSiO_3$ and mica.

12. The process of any one of the preceding claims, wherein said flocculant is selected from partially hydrolyzed polyacrylamide, modified cationic polyacrylamide, and diallyldiethylammonium chloride.

13. The process of Claim 1 including the step of lofting said dried mat prior to said curing step (f).

**Revendications**

1. Procédé de préparation d'un composite de polymère thermodurci renforcé par des fibres non-orientées comprenant les étapes de:
    (a) préparation d'une pâte aqueuse constituée de fibres de renforcement, d'un liant, et d'une formulation de polymère thermodurci choisie parmi
        (i) un polymère thermodurci solide;
        (ii) un polymère thermodurci solide et un agent de durcissement latent qui ne se mélangent pas intimement jusqu'à ce que tous deux soient chauffés et fondus; et
        (iii) une dispersion aqueuse du polymère thermodurci solide;
    (b) déstabilisation des solides dans la pâte avec un floculant polymère ayant une charge qui est opposée à la charge dudit liant, et égouttage de la pâte aqueuse;
    (c) collecte des solides sous la forme d'un mat;
    (d) séchage du mat dans des conditions telles que ledit polymère thermodurci reste dans un état dans lequel il pourra être formé à chaud;
    (e) saturation du mat préparé à partir de (a) (i) et (a) (iii) avec un coréactif liquide; et
    (f) présentation dudit mat à l'action d'une température élevée suffisante pour durcir ledit polymère et pour former ledit mat en ledit composite.

8

**2.** Procédé selon la revendication 1, dans lequel lesdites fibres de renforcement sont choisies parmi des fibres de verre, des fibres de céramique, des fibres de polyamide, des fibres de graphite, des fibres métalliques et des fibres de graphite ou de verre revêtues de métal, ou leurs mélanges, dans lequel lesdites fibres ont une longueur moyenne de 3,2 mm à 25,4 mm et un rapport d'aspect supérieur à 40.

**3.** Procédé selon la revendication 2, dans lequel lesdites fibres de renforcement sont des fibres de verre ayant une longueur moyenne de 3,2 à 19 mm.

**4.** Procédé selon les revendications 1, 2 ou 3, dans lequel ledit liant est un polymère organique insoluble dans l'eau ayant des charges de liaison anionique ou cationique et une taille de particules de 500 à 5 000 $10^{-10}$ m (500 Å à 5 000 Å), et ledit liant étant présent en une quantité de 1 à 10 pour-cent en poids, fondé sur le poids total, sur la base de solides secs, du composite.

**5.** Procédé selon l'une quelconque des revendications précédentes, dans lequel la résine thermodurcie est une résine époxy à terminaison vinylique, et le coréactif est un monomère polymérisable vinylique contenant un catalyseur.

**6.** Procédé selon la revendication 5, dans lequel ledit monomère polymérisable vinylique est le styrène.

**7.** Procédé selon l'une quelconque des revendications 1 à 4, dans lequel ladite résine thermodurcie est une résine du type phénol formaldéhyde et ledit agent de durcissement latent est choisi parmi l'hexaméthylènetétramine, l'urée formaldéhyde, la mélamine formaldéhyde et les polyamines.

**8.** Procédé selon l'une quelconque des revendications précédentes, dans lequel ledit agent de durcissement est un initiateur de radicaux libres.

**9.** Procédé selon la revendication 8, dans lequel ledit initiateur est choisi parmi les peroxydes capables d'amorcer la polymérisation par des radicaux libres.

**10.** Procédé selon l'une quelconque des revendications précédentes, dans lequel ledit composite comprend de 1 à 10 pour-cent en poids, sur la base du poids total sec de solides dans le composite, d'un additif choisi parmi des fibres de polymère, une pâte polyoléfine et une pulpe polyoléfine.

**11.** Procédé selon l'une quelconque des revendications précédentes, dans lequel ledit composite comprend jusqu'à 33 pour-cent en poids, sur la base du poids total sec de solides dans le composite, d'une charge choisie parmi les composés de silice, $CaCO_3$, $MgO$, $Mg(OH)_2$, $CaSiO_3$ et le mica.

**12.** Procédé selon l'une quelconque des revendications précédentes, dans lequel ledit floculant est choisi parmi le polyacrylamide partiellement hydrolysé, le polyacrylamide cationique modifié, et le chlorure de diallyldiéthylammonium.

**13.** Procédé selon la revendication 1, comprenant l'étape de montée dudit mat séché avant ladite étape de durcissement (f).

**Patentansprüche**

**1.** Verfahren zur Herstellung von mit ungeordneten Fasern verstärkten thermoplastischen Verbundpolymeren, die Schritte umfassend, daß man
a) eine wässrige Aufschlämmung, die Verstärkungsfasern, einen Binder, und eine aushärtende thermoplastische Polymerformulierung enthält, herstellt, wobei die thermoplastische Polymerformulierung ausgewählt ist aus
i) einem festen thermoplastischen Polymer,
ii) einem festen thermoplastischen Polymer und einem latenten Härtemittel, welche sich nicht innig ververmischen, bis beide Komponenten erwärmt und geschmolzen werden, und
iii) einer wässrigen Dispersion des festen thermoplastischen Polymers
b) die Feststoffe in der Aufschlämmung mit einem polymeren Flockungsmittel, welches eine dem Binder entgegengesetzte Ladung aufweist, destabilisiert, und die wässrige Aufschlämmung entwässert

9

c) die Feststoffe in Form einer Matte sammelt

d) die Matte unter Bedingungen trocknet, derart, daß das thermoplastische Polymer in einem Wärme-verformbaren Zustand bleibt

e) die nach a)(i) und a)(iii) hergestellte Matte mit einem flüssigen Koreaktanden sättigt, und

f) die Matte einer genügend hohen Temperatur aussetzt, um das Polymer auszuhärten und die Matte zum Verbundstoff auszubilden.

2. Verfahren nach Anspruch 1, bei welchem die Verstärkungsfasern aus Glas-Fasern, Keramik-Fasern, Polyamid-Fasern, Graphit-Fasern, Metallfasern und metallbeschichteten Glas- oder Graphit-Fasern, oder Mischungen derselben ausgewählt werden, wobei die Fasern eine durchschnittliche Länge von 3,2 bis 25,4 mm und ein Betrachtungsverhältnis von größer als 40 aufweisen.

3. Verfahren nach Anspruch 2, bei welchem die Vertärkungsfasern Glas-Fasern sind und eine durchschnittliche Länge von 3,2 bis 19 mm besitzen.

4. Verfahren nach Anspruch 1, 2, oder 3, bei welchem der Binder ein wasserunlösliches organisches Polymer-Partikel ist, anionische oder kationische gebundene Ladungen, und eine Partikel-Größe von 500 bis 5000 $10^{-10}$ m(500 bis 5000 Angström) besitzt, und der Binder in einer Menge von 1 bis 10 Gewichts-Prozent, basierend auf dem Gesamt-Trockengewicht der Feststoffe des Verbundstoffes, vorhanden ist.

5. Verfahren nach einem der vorhergehenden Ansprüche, bei welchem das thermoplastische Harz ein Vinyl-terminiertes Epoxid-Harz ist und der Koreaktand ein, einen Katalysator enthaltendes Vinyl-polymerisierbares Monomer darstellt.

6. Verfahren nach Anspruch 5, bei welchem das Vinylpolymerisierbare Monomer Styrol ist.

7. Verfahren nach einem der Ansprüche 1 bis 4, bei welchem das thermoplastische Harz ein Phenol-Formaldehydartiges Harz ist und das latente Härtungsmittel aus Hexamethylen-tetramin, Harnstoff-Formaldehyd, Melamine-Formaldehyd und Polyaminen ausgewählt wird.

8. Verfahren nach einem der vorhergehenden Ansprüche, bei welchem das Härtungsmittel ein Radikalstarter ist.

9. Verfahren nach Anspruch 8, bei welchem der Starter ausgewählt wird aus Peroxiden, die eine Radikalpolymerisation beginnen können.

10. Verfahren nach einem der vorhergehenden Ansprüche, bei welchem der Verbundstoff 1 bis 10 Gewichtsprozent, basierend auf dem Gesamttrockengewicht der Feststoffe im Verbundstoff, eines Additivs, das aus polymeren Fasern, aus Polyolefinkleister oder Polyolefinbrei ausgewählt wird, einschließt.

11. Verfahren nach einem der vorhergehenden Ansprüche, bei welchem der Verbundstoff bis zu 33 Gewichtsprozent, basierend auf dem Gesamttrockengewicht der Feststoffe im Verbundstoff, eines Füllstoffes, der ausgewählt wird aus Silizium-Verbindungen, $CaCO_3$, MgO, $Mg(OH)_2$ $CaSiO_3$ und Glimmer, einschließt.

12. Verfahren nach einem der vorhergehenden Ansprüche, bei welchem das Flockungsmittel ausgewählt wird aus teilteilweise hydrolisiertem Polyacrylamid, modifiziertem kationischen Polyacrylamid und Diallyldiethylammonium-Chlorid.

13. Verfahren nach Anspruch 1, welches das Aufhängen der gegetrockneten Matte vor dem Aushärtungs-schritt (f) einschließt.